# EUROPEAN PATENT APPLICATION

(11) **EP 4 553 054 A1**
(43) Date of publication of application: **14.05.2025**
(21) Application number: 23386115.2
(22) Date of filing: 10.11.2023
(51) Int. Cl.: C04B 28/02, C04B 28/04, C04B 24/40, C04B 26/28, B01J 20/22, B01J 20/28, B01J 20/30

(54) **COMPOSITE MATERIAL COMPRISING A METAL-ORGANIC FRAMEWORK**

(71) Applicant: National and Kapodistrian University of Athens, 10561 Athens (GR)
(72) Inventor: Oikonomopoulos, Panagiotis, 11522 (GR); Ntouros, Vasileios, 11633 Athens (GR); Assimakopoulos, Margarita Niki, 19009 Pikermi (GR); Papaefstathiou, Giannis, 16343 Ilioupoli (GR); Paraskevopoulou, Patrina, 17123 Nea Smyrni (GR); Raptopoulos, Grigorios, 16232 Vironas (GR)
(74) Representative: Kouzelis, Dimitrios

(57) **Abstract**

The present invention refers to a composite material (10), comprising a construction material (2), a metal-organic framework (3), and a binding agent (4) via which the metal-organic framework (3) is bound to the construction material (2), wherein the metal-organic framework (3) is configured to adsorb carbon dioxide. Further, the invention refers to a structural and/or decorative element (1) made of the composite material (10).

## Description

The present invention refers to a composite material and a method for manufacturing a composite material.

In the relentless pursuit of mitigating climate change, carbon dioxide (CO₂) has emerged as a valuable resource. This paradigm shift reflects a growing awareness of the urgent need to not only reduce emissions but also harness existing CO₂ for sustainable solutions. Utilizing CO₂ offers a promising avenue to address environmental challenges, with one of its remarkable benefits being the creation of new materials. These materials, derived from recycled CO₂, are increasingly recognized as valuable raw resources for construction, offering a dual advantage of CO₂ utilizition and the development of sustainable building materials. This intersection of climate action and material science presents a compelling narrative in the collective efforts to combat climate change while reshaping our built environment. Towards this direction, several examples of CO₂-derived building materials from waste have been reported.

Manufacturing construction materials from CO₂ and waste can help in the avoidance of the cost that comes with waste disposal. The most widely used wastes are those from power plants or industrial processes and specifically, fly ashes (FA) and steel slags. Fly ashes are left behind when coal is burnt, and steel slags are by-products of steel making.

An object of the present invention is to provide a material that is able to adsorb carbon dioxide (CO₂) from the atmosphere/atmospheric air and a manufacturing method of such a material.

This object is achieved by the subject matter of the independent claims.

In particular, the proposed material is a composite material comprising a construction material, a metal-organic framework (MOF), and a binding agent via which the metal-organic framework is bound to the construction material. The metal-organic framework is configured to/has the ability to adsorb carbon dioxide (exhibits adsorption of carbon dioxide). In particular, the proposed material is configured to/has the ability to adsorb carbon dioxide or in other words to exhibit adsorption of carbon dioxide. In particular, the construction material used is a construction material that comes in powder, in aggregate or in clay form. It is understood that the powder, aggregate or clay form of the construction material refers in particular to the construction material in its raw form, i.e., when not bound to the metal-organic framework. The composite material has the advantage that is suitable not only for the interiors of buildings but also for application on the external building envelope such as the facades of buildings as well as for the production of bricks and tiles.

It is understood that the composite material relies on the binding of two kind of materials in order to achieve CO₂ adsorption in structural and / or decorative elements utilized in building applications. The first category of substances is the MOF (Metal-organic Framework) crystalline microporous materials that exhibit CO₂ adsorption. CO₂ adsorption by MOFs is associated to the inherent microporous nature of this type of materials. The intrinsing property of a MOF to adsorb carbon dioxide is attributed to the microporosity of such materials and the presence of open metal sites (OMS) within the pores of the MOF which facilitate CO₂-OMS interactions. The second category of materials are construction materials that have a low cost and are used in construction.

The composite material according to the present invention has the following advantages:
1) It introduces an innovative and more environmentally friendly carbon sequestration technique compared to the existing techniques as there's no need for complex carbon capture machinery, equipment or facilities for the CO₂ to be captured; CO₂ can directly be stored on the building's skin that is made of the new composite material.
2) Moreover, it can provide new characteristics, that of carbon adsorption, to established materials commonly used in construction such as cement, gypsum as well as to recycled brick powder by doping them with microporous materials (MOF). The composite material allows for the construction material to directly capture CO₂.
3) It makes carbon capture technology widely available to the public since building owners/users can apply this technology to their buildings without any further modifications to the building structure nor installing heavy machinery or equipment in their buildings.
4) The composite material's production makes it ready to use even for low skilled professionals of the construction sector; the ingredients of the material can come to powder form thus allowing professionals in the construction sector to directly produce the composite material on site and subsequently integrate it in buildings as it doesn't require complex curing or handling.
5) The proposed composite material can be initially developed in a paste form. The advantage of the paste form is that the final product may take various shapes and after it can be left to dry. These might be, square tiles, rectangular bricks or any other more complicated geometry required in building applications.
6) If recycled, the proposed composite material gives back the captured CO₂ that can be collected and sold after as raw material to the market (chemical industry, food industry etc) and as a result it can incentivize other climate change mitigation strategies such as building renovations. Being based on physisorbents, the amount of energy required for the regeneration of the material is lower than that of chemisorbents, another sorbent material.
7) The proposed composite material gives solution to storage of carbon capture. Traditionally, carbon dioxide after being captured, it is stored to empty underground coal beds a process that requires special equipment and high amounts of energy. The composite material store carbon dioxide in their pores and keep it trapped.
8) The use of the composite material in buildings enhances nature-based solutions: Forests and trees in order to effectively sequestrate CO₂ should not be burnt for a period larger than 50-100 years, however wildfires, that are more frequent in the recent years as a result of climate change, put them at risk. On the contrary, buildings are well protected against fires and can serve as platforms for the composite material to serve under protected conditions.
9) Furthermore, it enables 3D printing techniques that allows cost effective scaled-up production as well as the creation of various shapes of the composite material allowing for sophisticated building applications. The fact that the proposed composite material retains its crystallinity even after they are wetted and extruded as a paste, a requirement if the composites are to be produced through 3D printing, provides the advantage of a cost effective scaled up production.
10) In addition, the use of the proposed composite material in buildings alleviates health impacts associated with high carbon dioxide concentrations in indoor environments such as headaches, sleepiness, poor concentration, loss of attention, increased heart rate and slight nausea.

Preferably, the construction material is cement, gypsum, terracotta material, clay, in particular structural clay tile material, a ceramic material, or concrete. In particular, the cement can be Portland cement, white Portland cement, coloured cement, Portland pozzolana cement, Portland limestone cement, air entraining cement, quick setting cement, low heat cement, high alumina cement, rapid hardening cement, expansive cement, extra rapid hardening cement, sulphate resisting cement, or blast furnace slag cement. It is noted that clay or terracotta material are the precursors of ceramics; terracotta or clay if fired turn into a ceramic material/ceramics. Further, the ceramic material can in particular be recycled ceramic material. The advantage of using recycled ceramic material is that waste construction products such as demolished clay blocks or fired bricks can be recycled by crushing and sieving, producing a powder, which afterwards can be mixed with a metal-organic material and a binding agent, form a new brick or any other monolithic shape that is capable of adsorbing CO₂ and be utilized in buildings. This process is favourable for the overall sustainability of the construction sector.

Preferably, the construction material is 30% to 60% w/w, more preferably 40% to 60% w/w, of the composite material. The construction material advantageously has the highest share/percentage w/w of components in the composite material. This has the advantage that the composite material retains the characteristics of the construction material.

Preferably, the metal-organic framework is 5% to 30% w/w, more preferably 5% to 25% w/w, even more preferably 6% to 10% w/w, of the composite material.

Preferably, the binding agent is 30% to 50% w/w of the composite material.

The combination of each of the aforementioned concentrations/concentration ranges of the construction material, the metal-organic framework and the binding agent can be combined with each other. In other words, the composite material may have the construction material, the metal-organic framework and the binding agent with any combination of the aforementioned concentrations. It is understood that the skilled person will choose the concentrations (percentages w/w) of the aforementioned components such that technically reasonable combinations arise. In particular, the sum of the concentrations (percentages w/w) of the construction material, the metal-organic framework and the binding agent cannot exceed 100%. In other words, their percentages add up to 100%, if the composite material comprises only, namely consists of, the construction material, the metal-organic framework and the binding agent, or to lower than 100%, if the composite material comprises a further material other than the construction material, the metal-organic framework and the binding agent.

The binding agent may preferably comprise 5% to 25% w/w of at least one of PVA, PVB, PVF, PVC, PVP, PEI, polysixolane, sucrose, PVDF, HPC, p-alumina, silica, graphite, bentonite, sesbania and talc, and 75% to 95% w/w of at least one of water, ethanol, methanol and DMF. This means that 5% to 25% w/w of the binding agent is one of the aforementioned substances/materials or any combination thereof and 75% to 95% w/w of the binding agent is one of water, ethanol, methanol and DMF or any combination thereof. DMF corresponds to dimethylformamide.

According to an alternative advantageous embodiment of the invention, the binding agent may comprise 5% to 20% w/w of at least one of methylcellulose, PVB, PVF, PVC, PVP, PEI, polysixolane, sucrose, PVDF, HPC, p-alumina, silica, graphite, bentonite, sesbania and talc, 30% to 60% w/w of at least one of ethanol, methanol and DMF (dimethylformamide), and 30% to 60% w/w water. This means that 5% to 20% w/w of the binding agent is one of the aforementioned substances/material or any combination thereof. It is also here understood that the skilled person will choose the concentrations (percentages w/w) of the aforementioned substances/materials of the binding agent such that technically reasonable combinations arise. In particular, the sum of the concentrations (percentages w/w) of the aforementioned materials/substances of the binding agent cannot exceed 100%. In other words, their percentages add up to 100%, if the binding agent comprises only, namely consists of, the aforementioned materials/substances or to lower than 100%, if the binding agent comprises a further material/substance other than the aforementioned materials/substances.

Preferably, the binding agent may comprise at least one of PVA, methylcellulose, PVB, PVF, PVC, PVP, PEI, polysixolane, sucrose, PVDF, HPC, p-alumina, silica, graphite, bentonite, sesbania and talc. Any combination of these substances/materials is possible and disclosed herein.

Advantageously, the metal-organic framework is in crystalline form. This means that the metal-organic framework is in crystalline form in the final product of the composite material, in other words after the manufacturing of the composite material in the bound state with the construction material. In particular, the metal-organic framework maintains its crystalline form after its binding with the construction material. Thus, the metal-organic framework remains intact as synthesized and is not transformed to another porous material.

It is noted that the metal-organic framework is porous, in particular microporous, material.

Preferably, the metal-organic framework is a zirconium-based metal-organic framework, in particular UiO-66 and/or its analogues, a metal-organic framework from the MIL-family, in particular MIL-53 and/or any MIL-XXX, wherein XXX refers to a number that is the ID of the MIL, or an imidazolate-based metal organic framework (ZIF), in particular ZIF-8 (zeolitic imidazolate framework-8 ) and/or ZIF-XX, wherein XX is a number that is the ID of the ZIF.

In particular when cement is combined with UiO-66 the concentration of UiO-66 is preferably 15% to 30% w/w, more preferably 20% to 30% w/w and even more preferably 25% to 30% w/w.

A zirconium-based metal-organic framework, a metal-organic framework from the MIL-family and an imidazolate-based metal organic framework from the ZIF-family each have the advantage of enhanced CO₂ capture compared to other metal-organic framework materials.

Preferably, the composite material may further comprise volcanic rock and/or fly ash, in particular wherein the volcanic and/or fly ash are at most 20% w/w of the composite material. In other words, an additional element in the form of powder or aggregates of fly ash and/or volcanic rock may be comprised by the composite material. The share/concentration (0% to 20% w/w of the composite material) is in particular on expense of the construction material. This means that a composite material that comprises volcanic rock and/or fly ash comprises less construction material w/w than a composite material that does not comprise volcanic rock and/or fly ash. The presence of volcanic rock and/or fly ash enhances the natural weathering of CO₂ and mineral sequestration. It is understood that the skilled person will choose the concentrations (percentages w/w) of the aforementioned materials such that technically reasonable combinations arise. In particular, the sum of the concentrations (percentages w/w) of the construction material, the metal-organic framework, the binding agent, and volcanic rock and/or fly ash cannot exceed 100%. In other words, their percentages add up to 100%, if the composite material comprises only, namely consists of, the construction material, the metal-organic framework, the binding agent, and volcanic rock and/or fly ash or to lower than 100%, if the composite material comprises a further material other than the construction material, the metal-organic framework, the binding agent, and volcanic rock and/or fly ash.

It is further understood that, if the composite material comprises volcanic rock and/or fly ash, the binding agent binds the construction material, the metal-organic framework, and the volcanic rock and/or fly ash to each other.

It is further understood that the term "volcanic rock" describes the material and not the state in which the volcanic rock is in the composite material. In other words, it is understood that the volcanic does not have the form of rock in the composite material.

It is noted that the formulation "the construction material, the metal-organic framework, the binding agent, and volcanic rock and/or fly ash" means "the construction material, the metal-organic framework, the binding agent, and at least one of volcanic rock and fly ash". Thus, the possible combinations based on this formulation are a) the construction material, the metal-organic framework, the binding agent, and volcanic rock b) the construction material, the metal-organic framework, the binding agent, and fly ash and c) the construction material, the metal-organic framework, the binding agent, volcanic rock and fly ash.

The composite material may comprise only the construction material, the metal-organic framework and the binding agent binding the construction material and the metal-organic framework to each other. If the composite material comprises volcanic rock and/or fly ash, the composite material may comprise only the construction material, the metal-organic framework, the binding agent, and volcanic rock and/or fly ash.

The present invention further refers to a structural element configured to be used for constructing a building, made, partly or completely, of the previously described composite material, and/or a decorative element configured for decorating a building. In other words, the present invention refers to an element made of the previously described composite material, wherein the element is a structural and/or decorative element configured to be used for constructing and/or decorating a building. The structural element may in particular be a tile or brick. The decorative element may in particular be a ceiling ornament, ceiling frame, floor frame, window ornament, or window frame.

The present invention further refers to a method for manufacturing a composite material, in particular the aforementioned composite material. The method comprises the steps:
□ providing a construction material, a metal-organic framework configured to adsorb carbon dioxide, and a binding agent,
□ mixing the metal organic framework with the construction material such that a homogenous powder occurs, and
□ adding the binding agent to the homogenous powder such that/until a mixture is formed.

Advantageously, the formed mixture can be understood as the manufactured composite material.

In particular, the step of adding the binding agent to the homogenous powder such that/until a mixture is formed comprises the step of adding the binding agent to the homogenous powder such that/until a paste-like mixture is formed.

A paste-like mixture or paste is within the framework of the present invention in particular a substance that behaves as a solid until a sufficiently large load or stress is applied, at which point it flows like a fluid. It is a thick, soft, sticky moist substance produced by mixing dry ingredients with a liquid.

The construction material is in particular in powder form, in aggregate form or in clay form.

It is understood that the homogenous powder is made of the metal-organic framework and the construction material.

Preferably, forming the mixture by adding the binding agent to the homogenous powder takes place at a temperature between 20 degrees Celsius and 30 degrees Celsius, in particular 25 degrees Celsius, and/or ambient pressure of 1 atm.

The present invention further refers to a method for manufacturing a structural and/or decorative element, in particular according to the previously described structural and/or decorative element, wherein the method comprises the steps:
□ manufacturing a previously described composite material,
□ shaping the mixture to a predetermined form for forming a macrostructure,
□ drying the macrostructure, and
□ heating the macrostructure at a predetermined temperature to form the structural and/decorative element.

Preferably, the mixture is extruded by an extrusion tool to form a pellet. Here, the form of the pellet is the aforementioned predetermined form. The extrusion tool may for example be a syringe. Alternatively, the paste-like mixture may preferably be moulded/put in a mold to provide the predetermined form. It is also possible that the paste-like mixture is 3D-printed to the predetermined form.

Preferably, the macrostructure is dried by leaving the macrostructure in ambient air (pressure of 1 atm). The temperature of the ambient air is preferably between 20 degrees Celsius and 30 degrees Celsius, in particular 20 degrees Celsius. The macrostructure is preferably left to dry for at least 1 hour, more preferably for at least 3 hours, even more preferably for at least 5 hours. The macrostructure is preferably dried such that most (higher than 50% w/w) of the moisture is evaporated.

Preferably, the predetermined temperature at which the macrostructure is heated is between 60 degrees Celsius and 100 degrees Celsius, more preferably between 70 degrees Celsius and 90 degrees Celsius, more preferably between 78 degrees Celsius and 83 degrees Celsius.

The previously described features with regard to the composite material apply to the method too. In particular, the features of the dependent claims regarding the composite material can be combined with the features and the claims regarding the manufacturing method.

If the composite material comprises volcanic rock and/or fly ash, the method preferably comprises the step of mixing the volcanic rock and/or fly ash, the metal organic framework and the construction material with each other such that a homogenous powder occurs. This may in particular replace the previously mentioned mixing step. In particular, the volcanic rock and/or fly ash, the construction material and the metal organic framework can be mixed together at a single step such that a homogenous powder (made of these materials) occurs or the volcanic rock and/or fly ash can be added to the homogenous powder made of the metal organic framework and the construction material such that a homogenous powder made of the volcanic rock and/or fly ash, the construction material and the metal-organic framework occurs.

Preferred combinations of construction material, metal-organic framework and binding agent are the following:
a. gypsum, an imidazolate-based metal organic framework, PVA
b. gypsum, a metal-organic framework from the MIL-family, PVA
c. gypsum, a zirconium-based metal-organic framework, PVA
d. ceramic material, an imidazolate-based metal organic framework, PVA
e. ceramic material, a metal-organic framework from the MIL-family, PVA
f. ceramic material, a zirconium-based metal-organic framework, PVA
g. cement, an imidazolate-based metal organic framework, PVA
h. cement, a metal-organic framework from the MIL-family, PVA
i. gypsum, an imidazolate-based metal organic framework, methylcellulose
j. gypsum, a metal-organic framework from the MIL-family, methylcellulose
k. gypsum, a zirconium-based metal-organic framework, methylcellulose
l. ceramic material, an imidazolate-based metal organic framework, methylcellulose
m. ceramic material, a metal-organic framework from the MIL-family, methylcellulose
n. ceramic material, a zirconium-based metal-organic framework, methylcellulose
o. ceramic material, a zirconium-based metal-organic framework, methylcellulose
p. cement, an imidazolate-based metal organic framework, methylcellulose

In these preferred combinations for a composite material, the imidazolate-based metal organic framework may preferably be ZIF-8 and/or the metal-organic framework from the MIL-family may preferably be MIL-53 and/or the zirconium-based metal-organic framework may preferably be UiO-66.

These and further details, advantages and features of the present invention will be described based on an embodiment and specific examples of the composite material and their manufacturing methods by taking reference to the accompanying figures.
Figure 1 shows a schematic view of the composite material according to an embodiment of the present invention and modifications of the embodiment.
Figure 2 shows a flow diagram for the method of manufacturing of the composite material according to the embodiment of the present invention and the two modifications of the embodiment as well for the method of manufacturing a structural and/or decorative element made of the composite material.
Figures 3 to 37 refer to samples made of the composite material.

In particular:

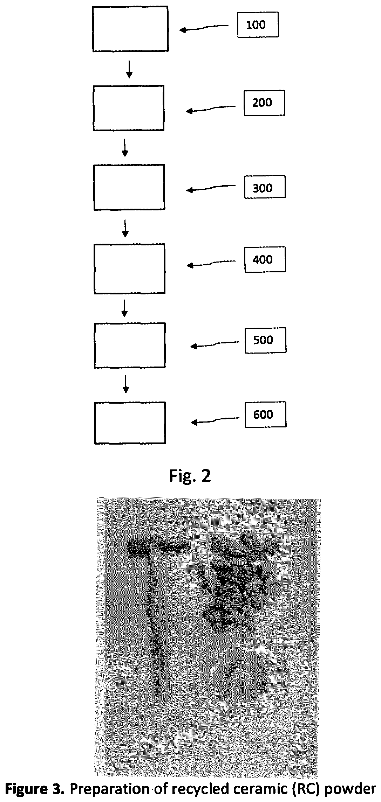

Figure 3 shows the preparation of recycled ceramic (RC) material in powder form.

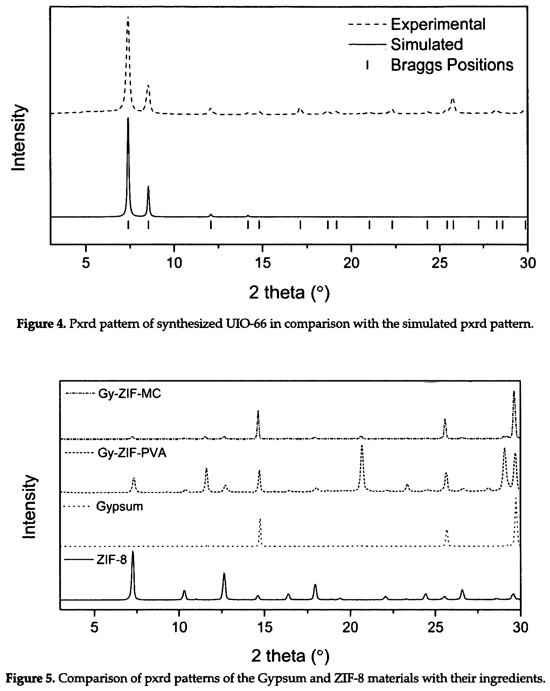

Figure 4 shows a diagram of pxrd pattern of synthesized UIO-66 in comparison with a simulated pxrd pattern.
Figure 5 shows the comparison of pxrd patterns of gypsum and ZIF-8 materials with their ingredients.

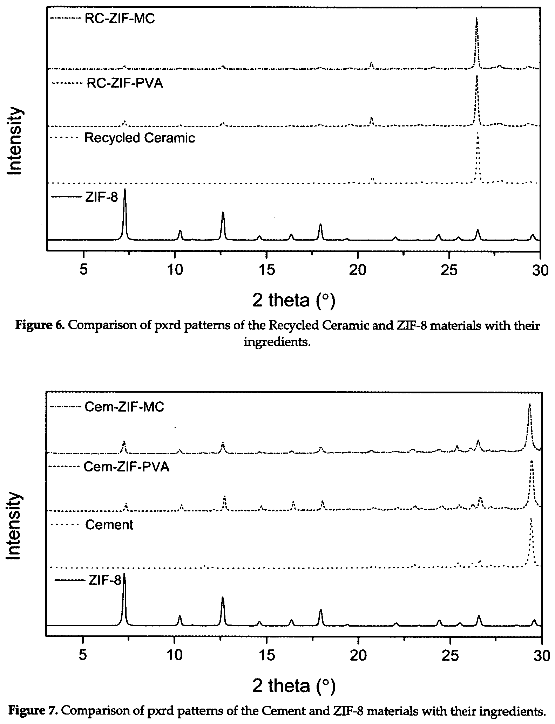

Figure 6 shows the comparison of pxrd patterns of recycled ceramic material and ZIF-8 materials with their ingredients.
Figure 7 shows the comparison of pxrd patterns of cement and ZIF-8 materials with their ingredients.

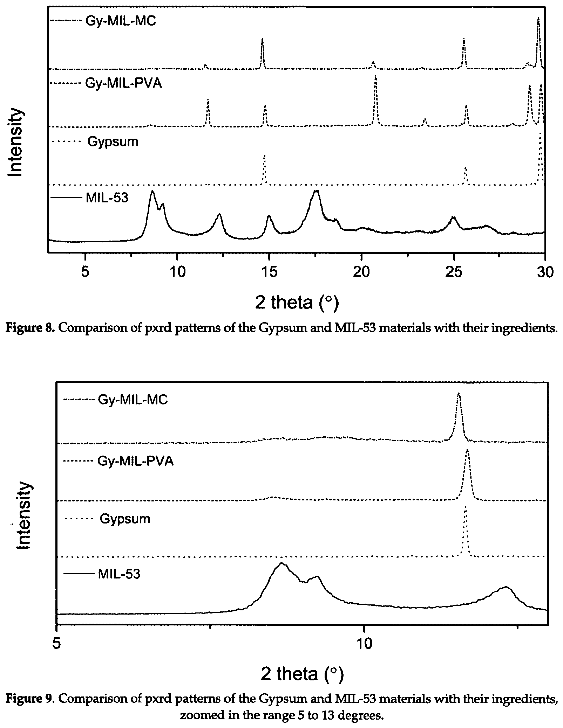

Figure 8 shows the comparison of pxrd patterns of gypsum and MIL-53 materials with their ingredients.
Figure 9 shows the comparison of pxrd patterns of gypsum and MIL-53 materials with their ingredients, zoomed in the range of 5 to 13 degrees.

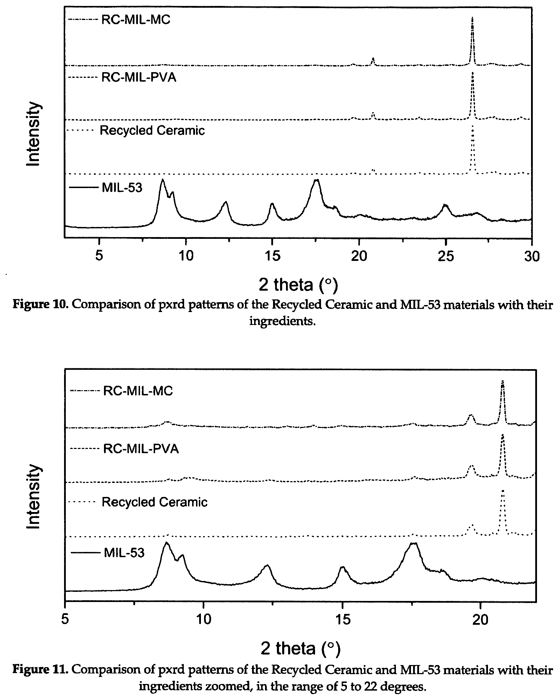

Figure 10 shows the comparison of pxrd patterns of recycled ceramic material and MIL-53 materials with their ingredients.
Figure 11 shows the comparison of pxrd patterns of recycled ceramic material and MIL-53 materials with their ingredients zoomed, in the range of 5 to 22 degrees.

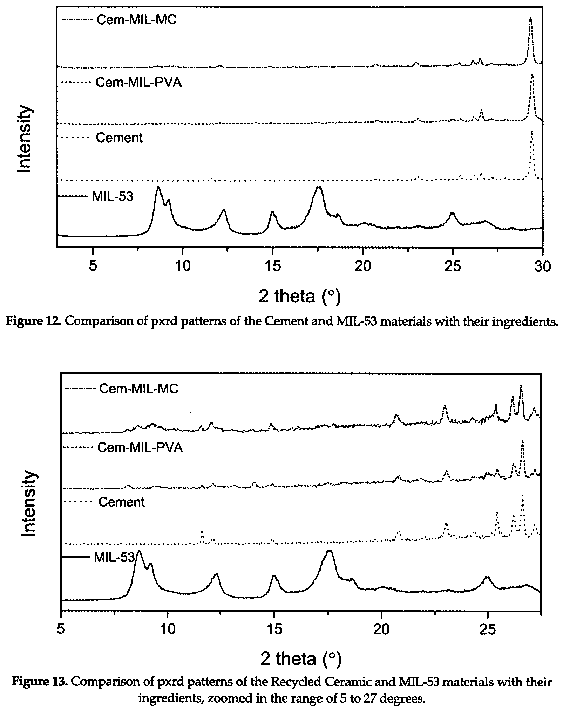

Figure 12 shows the comparison of pxrd patterns of cement and MIL-53 materials with their ingredients.
Figure 13 shows the comparison of pxrd patterns of recycled ceramic material and MIL-53 materials with their ingredients, zoomed in the range of 5 to 27 degrees.

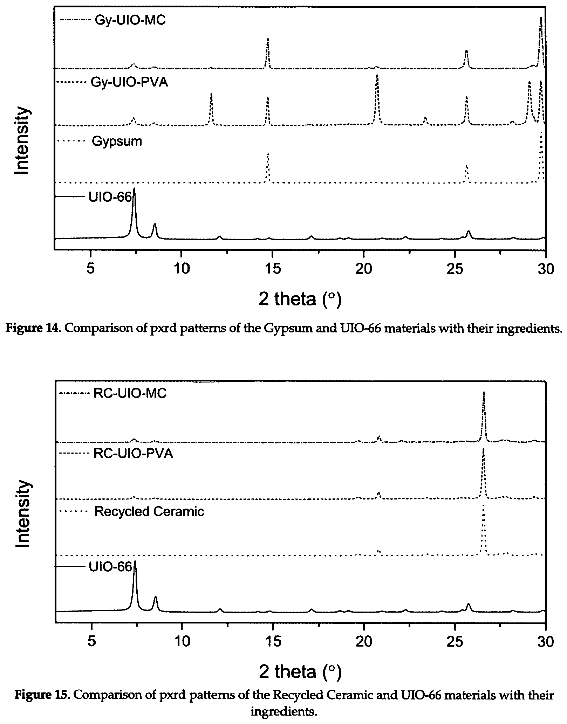

Figure 14 shows the comparison of pxrd patterns of gypsum and UIO-66 materials with their ingredients.
Figure 15 shows the comparison of pxrd patterns of recycled ceramic material and UIO-66 materials with their ingredients.

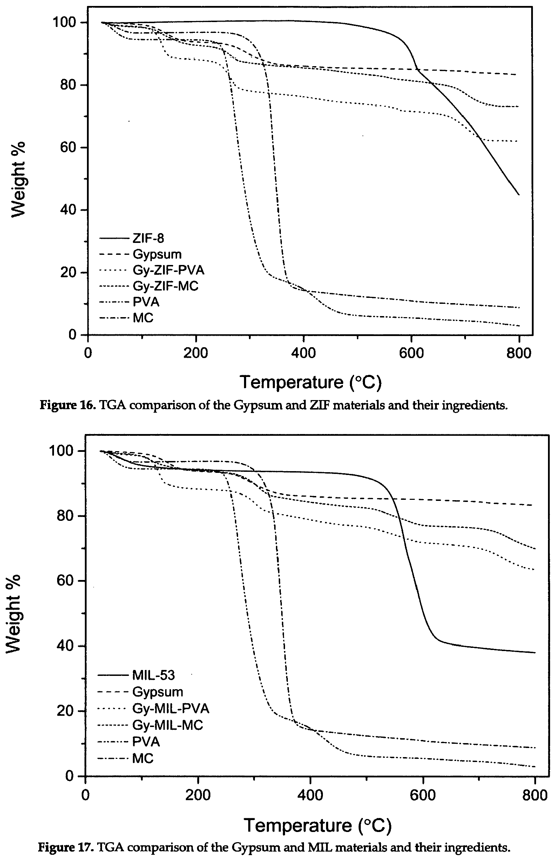

Figure 16 shows the TGA comparison of gypsum and ZIF materials and their ingredients.
Figure 17 shows the TGA comparison of gypsum and MIL materials and their ingredients.

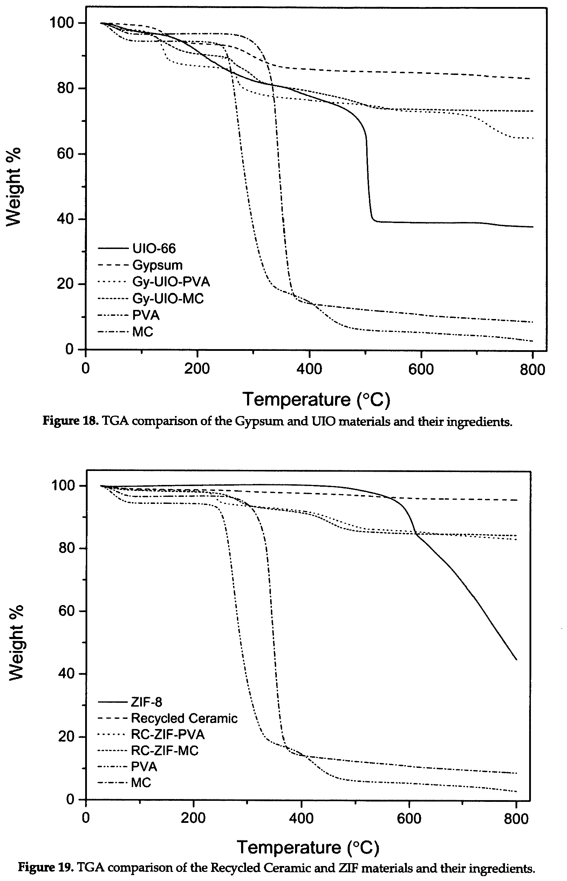

Figure 18 shows the TGA comparison of gypsum and UIO materials and their ingredients.
Figure 19 shows the TGA comparison of recycled ceramic material and ZIF materials and their ingredients.

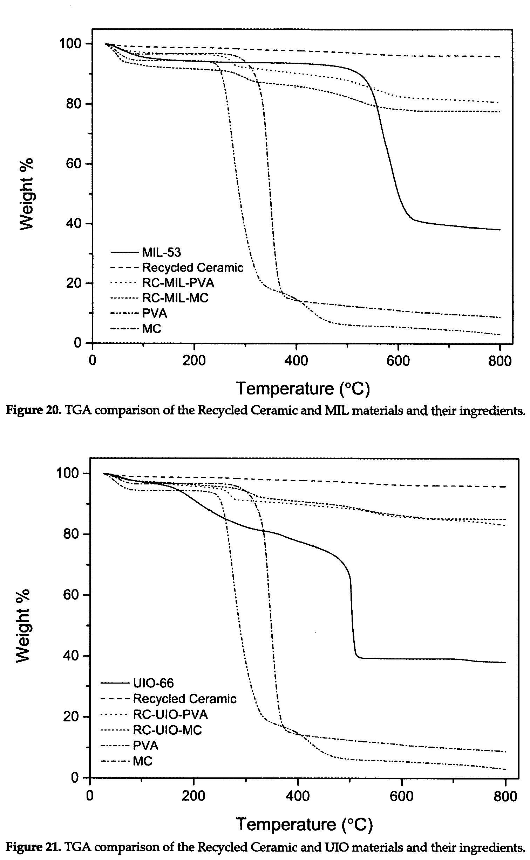

Figure 20 shows TGA comparison of recycled ceramic material and MIL materials and their ingredients.
Figure 21 shows the TGA comparison of recycled ceramic material and UIO materials and their ingredients.

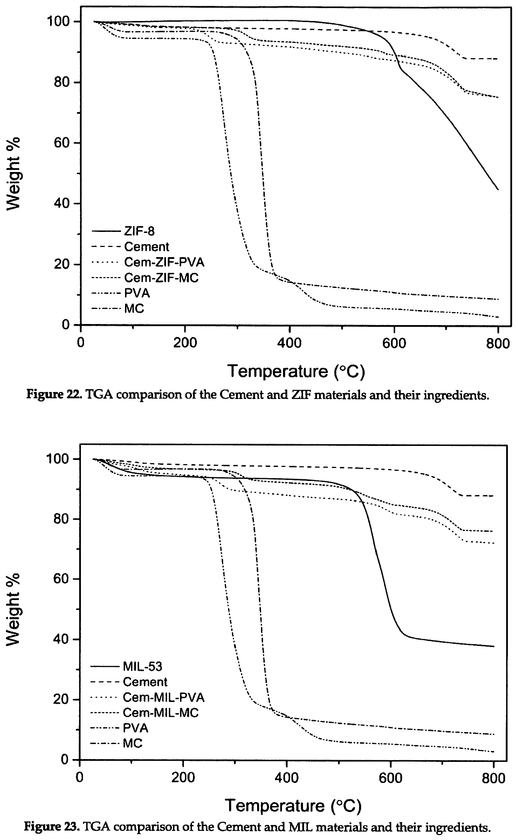

Figure 22 shows the TGA comparison of cement and ZIF materials and their ingredients.
Figure 23 shows the TGA comparison of cement and MIL materials and their ingredients.

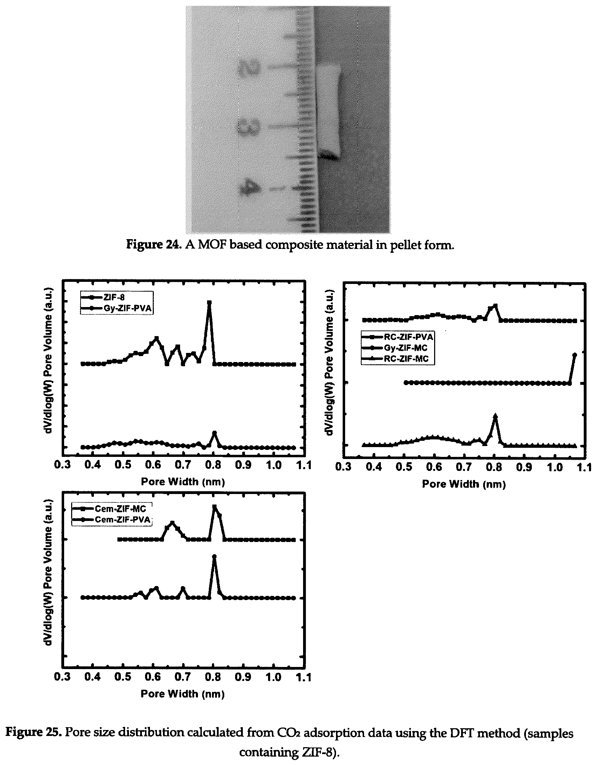

Figure 24 shows a MOF-based composite material in pellet form.
Figure 25 shows the pore size distribution calculated from CO₂ adsorption data using the DFT method (samples containing ZIF-8).

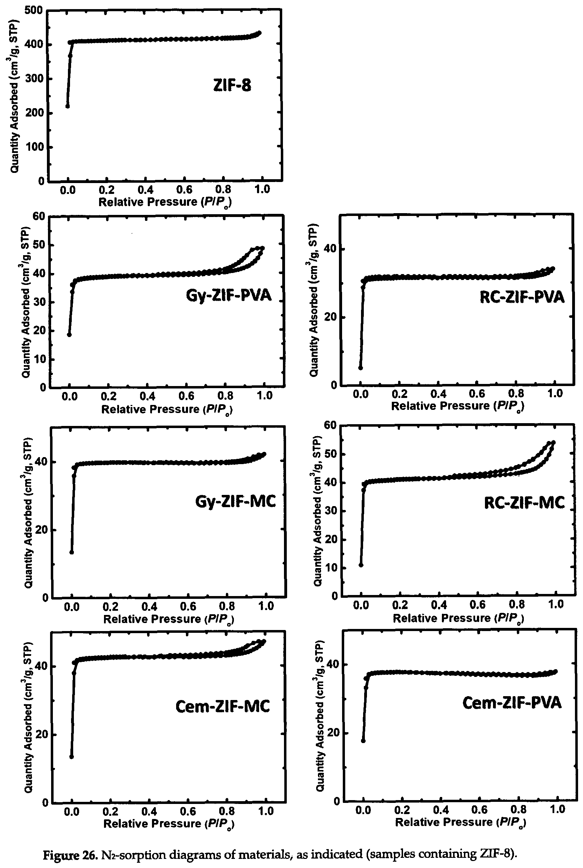

Figure 26 shows N₂-sorption diagrams of materials (samples containing ZIF-8).

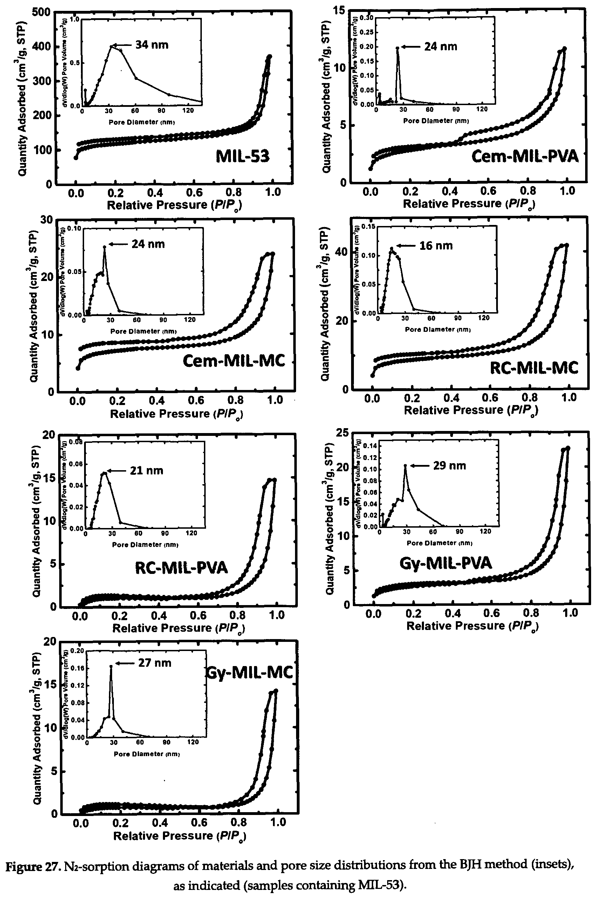

Figure 27 shows N₂-sorption diagrams of materials and pore size distributions from the BJH method (insets) (samples containing MIL-53).

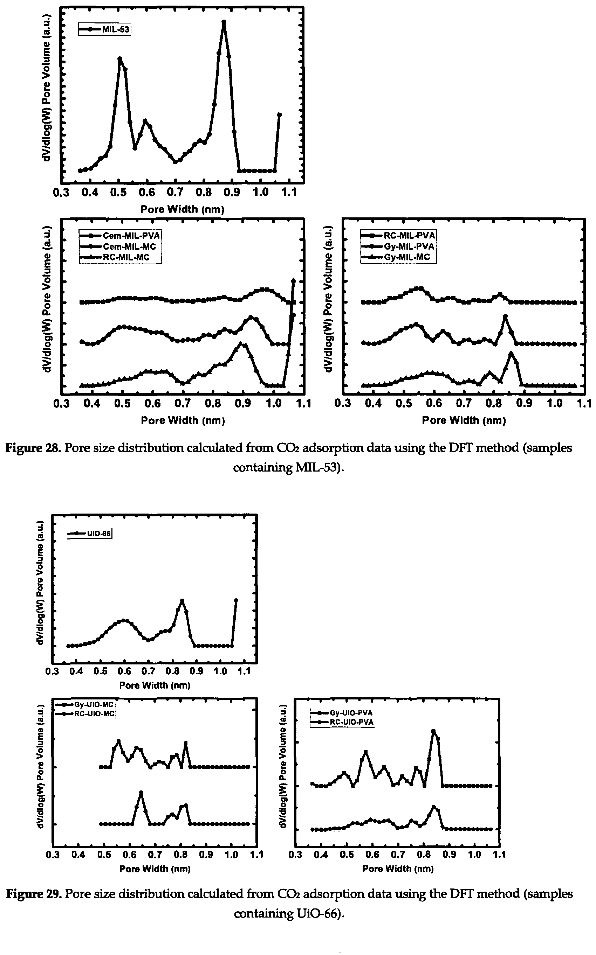

Figure 28 shows the pore size distribution calculated from CO₂ adsorption data using the DFT method (samples containing MIL-53).
Figure 29 shows the pore size distribution calculated from CO₂ adsorption data using the DFT method (samples containing UiO-66).

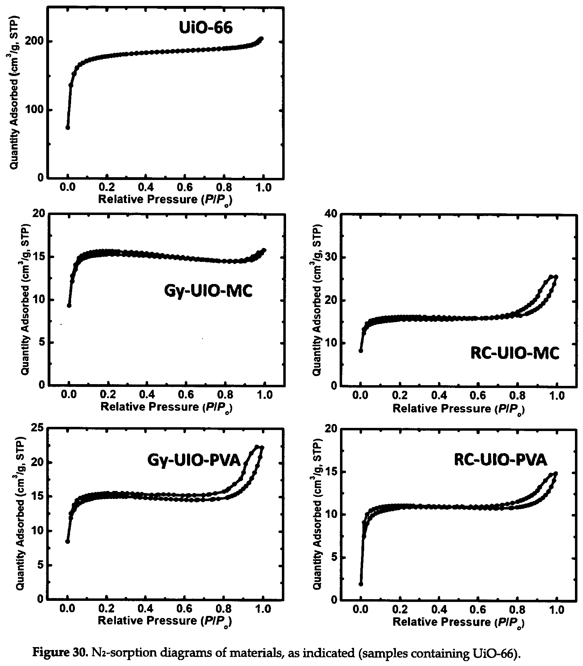

Figure 30 shows N₂-sorption diagrams of materials (samples containing UiO-66).

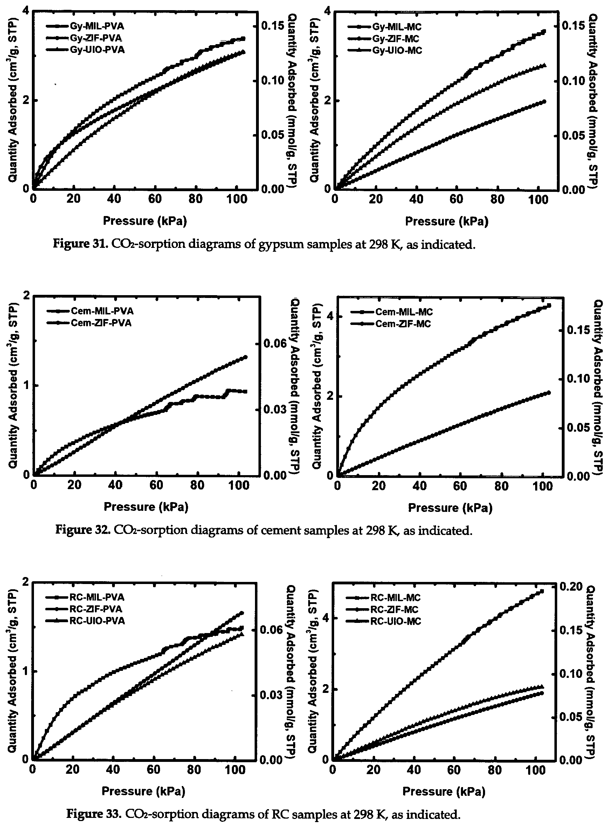

Figure 31 shows CO₂-sorption diagrams of gypsum samples at 298 K.
Figure 32 shows CO₂-sorption diagrams of cement samples at 298 K.
Figure 33 shows CO₂-sorption diagrams of recycled ceramic material samples at 298 K.

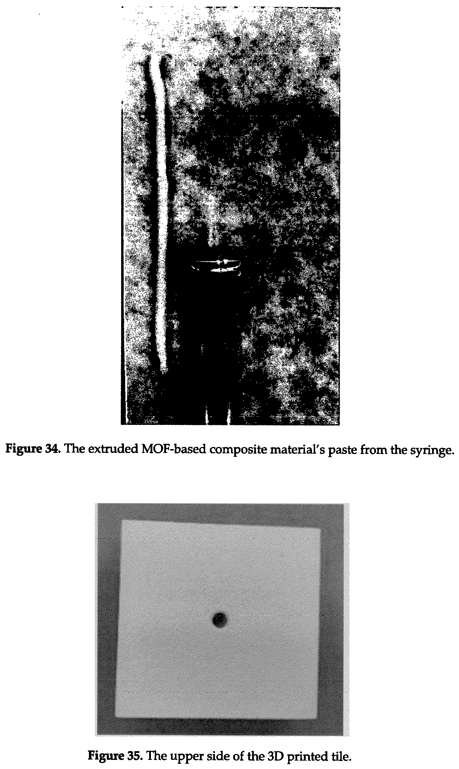

Figure 34 shows the extruded MOF-based composite material's paste (paste-like mixture) from the syringe.
Figure 35 shows the upper side of a 3D printed tile.

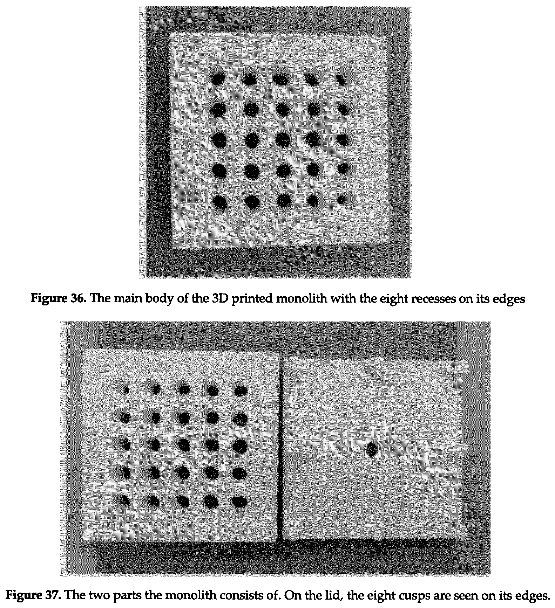

Figure 36 shows the main body of the 3D printed monolith with eight recesses on its edges.
Figure 37 shows the two parts the monolith is made of.

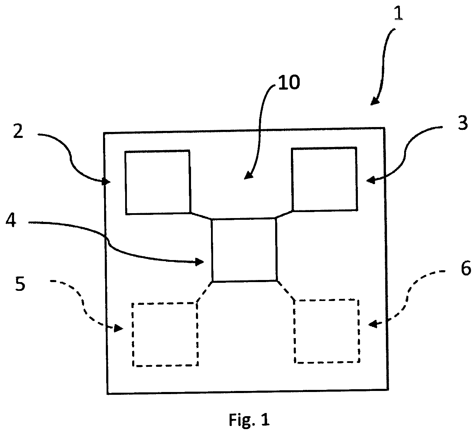

In the following, a composite material 10 and a method for manufacturing the composite material 10 according to an embodiment of the present invention and modifications of the embodiment as well as a method for manufacturing a structural and/or decorative element 1 made of the composite material 10 are described with reference to figures 1 and 2.

The composite material 10 comprises a construction material 2, a metal-organic framework 3, and a binding agent 4 via which the metal-organic framework 3 is bound to the construction material 2. The metal-organic framework 3 is configured to/has the ability to adsorb carbon dioxide. In particular, the construction material 1 used is a construction material that comes in powder, in aggregate or in clay form.

The construction material 1 may be cement, gypsum, terracotta material, clay, in particular structural clay tile material, a ceramic material, or concrete. In particular, the cement can be Portland cement, white Portland cement, coloured cement, Portland pozzolana cement, Portland limestone cement, air entraining cement, quick setting cement, low heat cement, high alumina cement, rapid hardening cement, expansive cement, extra rapid hardening cement, sulphate resisting cement, or blast furnace slag cement. The ceramic material can in particular be recycled ceramic material.

The construction material 2 has a concentration of 30% to 60% w/w, more preferably 40% to 60% w/w, in the composite material 10. The construction material 2 advantageously has the highest share/percentage w/w of the components in/of the composite material 10. This has the advantage that the composite material 10 retains the characteristics of the construction material 2.

The metal-organic framework 3 that is in crystalline form has a concentration of 5% to 30% w/w, preferably 5% to 25% w/w, more preferably 6% to 10% w/w, in the composite material 10.

The binding agent 4 has a concentration of 30% to 50% w/w in the composite material 10.

The binding agent 4 may comprise 5% to 25% w/w of at least one of PVA, PVB, PVF, PVC, PVP, PEI, polysixolane, sucrose, PVDF, HPC, p-alumina, silica, graphite, bentonite, sesbania and talc, and 75% to 95% w/w of at least one of water, ethanol, methanol and DMF. Alternatively, the binding agent may comprise 5% to 20% w/w of at least one of methylcellulose, PVB, PVF, PVC, PVP, PEI, polysixolane, sucrose, PVDF, HPC, p-alumina, silica, graphite, bentonite, sesbania and talc, 30% to 60% w/w of at least one of ethanol, methanol and DMF and 30% to 60% w/w water.

The metal-organic framework 3 may be a zirconium-based metal-organic framework, in particular UiO-66 and/or its analogues, a metal-organic framework from the MIL-family, in particular MIL-53 and/or any MIL-XXX, wherein XXX refers to a number that is the ID of the MIL, or an imidazolate-based metal organic framework (ZIF), in particular ZIF-8 (zeolitic imidazolate framework-8 ) and/or ZIF-XX, wherein XX is a number that is the ID of the ZIF.

According to a first modification of the embodiment, the composite material 10 further comprises volcanic rock 5. The binding agent 4 binds the construction material 2, the metal-organic framework 3 and the volcanic rock 5 to each other. The volcanic rock 5 has a concentration of at most 20% w/w of the composite material 10.

According to a second modification of the embodiment, the composite material 10 further comprises fly ash 6. The binding agent 4 binds the construction material 2, the metal-organic framework 3 and the fly ash 6 to each other. The fly ash 6 has a concentration of at most 20% w/w of the composite material 10.

According to a third modification of the embodiment, the composite material 10 further comprises volcanic rock 5 and fly ash 6. The binding agent 4 binds the construction material 2, the metal-organic framework 3, the volcanic rock 5 and the fly ash 6 to each other. The volcanic rock 5 and the fly ash 6 together have a concentration of at most 20% w/w of the composite material 10.

The composite material 10 is configured to adsorb carbon dioxide due to the presence of the metal-organic framework 3 that adsorbs carbon dioxide.

The structural and/or decorative element 1 may in particular be formed a tile or a brick. As the composite material 10 from which the structural and/or decorative element 1 is made of, is configured to adsorb carbon dioxide, the structural and/or decorative element 1 can also adsorb carbon dioxide.

With reference to figure 2, a method for manufacturing a previously described composite material 10 and a method for manufacturing a structural and/or decorative element 1 are described.

In step 100, a construction material 2, a metal-organic framework 3 configured to adsorb carbon dioxide, and a binding agent 4 are provided. The construction material 1 is in particular in powder form, in aggregate form or in clay form.

In step 200, the metal organic framework 3 is mixed with the construction material 2 such that a homogenous powder occurs.

In step 300, the binding agent 4 is added to the homogenous powder until an in particular paste-like mixture is formed. Forming the past-like mixture by adding the binding agent 4 to the homogenous powder takes place at a temperature between 20 degrees Celsius and 30 degrees Celsius, in particular 25 degrees Celsius, and ambient pressure of 1 atm.

Steps 100 to 300 belong to the method for manufacturing the composite material 10.

In step 400, the paste-like mixture is shaped to a predetermined form for forming a macrostructure. The paste-like mixture is extruded by an extrusion tool to form a pellet. Here, the form of the pellet is the aforementioned predetermined formed. The extrusion tool may for example be a syringe. Alternatively, the paste-like mixture may preferably be moulded/put in a mold to provide the predetermined form. Alternatively, the paste-like mixture can be 3D-printed to the predetermined form.

In step 500, the macrostructure is dried. Preferably, the macrostructure is dried by leaving the macrostructure in ambient air.

In step 600, the macrostructure is heated at a predetermined temperature between 60 degrees Celsius and 100 degrees Celsius, preferably between 70 degrees Celsius and 90 degrees Celsius, more preferably between 78 degrees Celsius and 83 degrees Celsius, to form the structure and/or decorative element 1.

Steps 100 to 600 belong to the method for manufacturing the structural and/or decorative element 1.

If the composite material 10 to be manufactured should comprise volcanic rock and/or fly ash according to the first to third modification as described above, in step 100, volcanic rock 5 and/or fly ash 6 are also provided. Further, in step 200, the metal organic framework 3, the construction material 2, and the volcanic rock 5 and/or fly ash 6 are mixed together such that a homogenous powder occurs.

The following description refers to manufactured examples/samples of the composite material 10 and the structural and/or decorative element 1.

### Materials and methods

Polyvinyl alcohol with molecular weight (Mw) in the range of 89,000 to 98,000 and being at least 99% hydrolyzed and methylcellulose (MC) with viscosity of 4,000cp were purchased from Sigma Aldrich. Cement was purchased from Titan Cement Group, gypsum was purchased from KNAUF, while the ceramic material in powder form was produced after breaking, thrusting and sieving demolished bricks. ZIF-8 and MIL-53(AI) were purchased from Sigma Aldrich as Basolite Z1200 and Basolite A100 respectively. UiO-66 was synthesized in the laboratory as follows:
466 mg (2 mmol) ZrCl4, 20 mL DMF and 2.5 mL concentrated HCl were placed in a vial and sonicated for 20 minutes until fully dissolved. 332 mg (2 mmol) H2BDC were dissolved in 30 mL DMF and were added to the Zr solution, and the mixture was stirred for 20 minutes before being heated at 85 °C overnight. The resulting solid was centrifugated and washed with DMF (2 x 30 mL), H₂O (30 mL) and then MeOH (2 x 30 mL). Finally, 30 mL MeOH were added, and the mixture was left under stirring overnight. The crystalline powder was centrifugated and washed two more times with 30 mL MeOH and dried under vacuum at 40°C overnight. For the activation the product was placed at 150°C under vacuum for 3 hours.

### Material samples

The experiments were carried out in two different ways depending on the binding agent used. The binding agents were selected in order to be compliant with two different 3D printing techniques. PVA is compatible with extrusion techniques that can be modeled with the extrusion of a paste from a syringe while methylcellulose is compatible with open powder 3D printing techniques in which a printing head jets aqueous binding solution over a powder. As a result, 16 samples were prepared; 8 samples with PVA as a binding agent and 8 samples with methylcellulose as the binding agent, all described in **Table 1** and **Table 2.**

In the case of the PVA, a solution of PVA/H₂O was prepared by adding 2.65 g of Polyvinyl alcohol in 15 mL H₂O and refluxed until a clear gellish solution was achieved. At room temperature the PVA solution is very thick and before each experiment it was heated under stirring at low temperature, in particular between 30 degrees Celsius and 50 degrees Celsius.. In a typical experiment the quantity of the construction material and the MOF were weighed in a 1 ml vail and mixed until a homogeneous powder was produced. Then the warm 15% PVA/H₂O solution was added and the mixture was gently stirred. The mixture was transferred in a disposable syringe and extruded on a paper filter in order to dry overnight.

In the case of the methylcellulose, a 1:1 H₂O / EtOH mixture was prepared. Then, all the materials (construction material, MOF and MC) were weighed in the same 1 ml vial and mixed until become homogenous. Afterwards, a certain quantity, in particular between 200mg to 300mg, of the 1:1 H₂O / EtOH mixture was added until the mixture became paste-like and then it was transferred in a disposable syringe, to be extruded on a paper filter for overnight drying. The detailed experimental parameters are shown in the following **Tables 1 and 2.**

**Table 1 Experimental parameters of the PVA materials.**

| **Sample** | **Construction Material in mg** | **MOF in mg** | **PVA/H₂O 15% in mg** | **MOF %** |
|---|---|---|---|---|
| **Gy-ZIF-PVA** | 400.8 | 50.4 | 205 | 7.38 |
| **Gy-MIL-PVA** | 399.7 | 49.8 | 225 | 7.36 |
| **Gy-UIO-PVA** | 400.1 | 50.1 | 229 | 7.68 |
| **RC-ZIF-PVA** | 399.1 | 49.8 | 205 | 7.47 |
| **RC-MIL-PVA** | 400.6 | 50.2 | 221 | 7.38 |
| **RC-UIO-PVA** | 399.5 | 50.4 | 270 | 7.62 |
| **Cem-ZIF-PVA** | 400.2 | 50 | 231 | 7.40 |
| **Cem-MIL-PVA** | 400.6 | 49.2 | 215 | 7.00 |

**Table 2: Experimental parameters of the MC materials.**

| **Sample** | **Construction Material in mg** | **MOF in mg** | **MC in mg** | **H₂O / EtOH 1:1 in mg** | **MOF %** |
|---|---|---|---|---|---|
| **Gy-ZIF-MC** | 400.2 | 50.2 | 22.5 | 205 | 7.41 |
| **Gy-MIL-MC** | 400.5 | 50 | 23.5 | 256 | 6.91 |
| **Gy-UIO-MC** | 400.4 | 49.7 | 22.5 | 238 | 6.99 |
| **RC-ZIF-MC** | 398.9 | 49.2 | 23 | 201 | 7.32 |
| **RC-MIL-MC** | 399.1 | 50.1 | 22.2 | 252 | 6.93 |
| **RC-UIO-MC** | 400 | 50.5 | 22.5 | 283 | 6.68 |
| **Cem -ZIF-MC** | 400.5 | 50.2 | 22.5 | 258 | 6.87 |
| **Cem-MIL-MC** | 399 | 49.9 | 22.7 | 295 | 6.51 |

It is understood that GY stands for gypsum, RC for recycled ceramic material, Cem for cement, MC for methylcellulose, ZIF for ZIF-8 an imidazolate-based metal organic framework, MIL for MIL-53 a MIL family metal organic framework and UIO for UiO-66 a zirconium-based metal-organic framework.

### X-ray Powder Diffraction Results

Powder X-ray diffraction patterns were obtained for the examples of the composite materal on a Bruker D8 Advance instrument equipped with a Lynxeye XE-T detector. Cu Ka (λ=1.5418 Å) was used at room temperature of 20 degrees Celsius; and at an angle range of 3 to 30 degrees. The measurements were conducted at the Core Facility of National and Kapodistrian University of Athens.

The pxrd patterns are crucial for the characterization of the samples. Each construction material consists of a mixture of inorganic salts, usually carbonate or sulfate and different kinds of oxides. These materials usually present high crystallinity in X-ray diffraction. On the other hand, MOF's crystallinity depends on the synthesis of the product. The two binding agents, namely PVA and MC, that were used don't exhibit any crystallinity, as expected for organic polymers.

Figures 5 to 15 show the comparison of the pxrd patterns of the corresponding construction material and the MOF, regardless of the binding agent. It can easily be observed the peaks from both the construction material and the MOF especially in the cases of the ZIF-8 even at such low percentage (^{~}7.5%) of the MOFs. The initial pxrd pattern of the MIL-53 exhibits low crystallinity although the high porosity of the MOF that was measured in the BET experiment. However, when zoomed in very broad peaks that correspond to those of the MIL-53 at low angles can be observed. This, as well as the BET measurements verify the existence of the MIL-53 in the samples of the composite material. The UIO-66 was synthesized by slightly modifying an already reported synthetic route according to M. J. Katz et al., "A facile synthesis of UiO-66, UiO-67 and their derivatives," Chem. Commun., vol. 49, no. 82, pp. 9449-9451, Sep. 2013, doi: 10.1039/C3CC46105J. The pxrd pattern shown in figure 4 agrees with the simulated pattern of the reported MOF. In the pxrd patterns of the composite materials the peaks of UIO-66 can be easily observed when it was mixed with either gypsum or the recycled ceramic material.

### Thermo Gravimetric Analysis Results

TGA diagrams shown in figures 16 to 23 were recorded on a Mettler-Toledo TGA/DSC1 instrument under a N₂ flow of 50mL/min. The measurements were conducted at the laboratory of Inorganic Chemistry of the Department of Chemistry of the National and Kapodistrian University of Athens.

Thermogravimetric analysis is essential for these kind of composite materials, as it reveals their thermal stability. A common feature in most TGA diagrams is a small weight loss up until 100°C that is attributed to the moisture of the samples. The first step (weight loss) is the degradation of the binding agent that takes place at around 230°C. As the binding agents are organic polymers, they are degraded earlier than the strong networks of the MOFs and the inorganic salts and oxides of the construction material.

The second step that is observed is the degradation of the construction material. The materials with gypsum exhibit a weight loss at around 150°C that is attributed in the dehydration of the CaSO₄·2H₂O, shown in the reactions below. The dehydration is completed in a second step at around 220°C. At around 700°C, a small weight loss that can be assigned to the decomposition of calcium carbonate can be observed.

CaSO₄·2H₂O → CaSO₄·1/2H₂O + 3/2H₂O

CaSO₄·1/2H₂O → CaSO₄ + 1/2H₂O

On the other hand, in the TGA diagrams of the composite materials made with the recycled ceramic material it is easily noticed that there is not a clear weight loss but a removal of the moisture of the salts and oxides. However, upon a closer look it can be observed a small weight loss at around 570°C because of the face transition of the α-quartz into β-quartz. Finally, in the case of cement only one main weight loss can be observed that is attributed to the decarbonation of calcium carbonate at around 700°C.

CaCOa -> CaO + CO₂

The third step is assigned to the degradation of the MOFs. All three MOFs exhibit moisture loss up to 100°C. ZIF-8 demonstrates thermal stability even at 600°C when the degradation of the ligand starts. MIL-53 also presents good thermal stability and ligand starts degrading after 500°C in the corresponding materials. Finally, the UIO-66 presents weight loss in an extented range of temperatures starting at 100°C until 500°C when the degradation of the ligand happens. The slow weight loss that takes place at 150°C to 400°C is due to the DMF solvent that may has not been fully removed from the porous of the MOF or the partially destruction of the bonds inside the Zr₆ cluster that UIO-66 is based on.

### CO₂ Porosimetry Results

Porosimetry experiments were conducted using a Micromeritics ASAP 2020 surface area and porosity analyzer. All 16 samples of the composite material were tested in pellet form of 1-1.5cm length and 0.22cm diameter (figure 24). To remove any adsorbed gases or impurities from the samples, those were degassed under vacuum at 80 °C for 24h. Initially, porosimetry measurements were made to cement, gypsum, recycled ceramic material, PVA and methylcellulose in order to account for any CO₂ adsortion capacity of theirs, however no such characteristic was measured and these materials are not capable to adsorb CO₂.

ZIF-8 has a high BET surface area, comprised almost entirely of micropores. All samples containing ZIF-8 have a BET and a micropore surface area close to 10% of those of the pure MOF. A similar trend is observed for the CO₂ sorption capacity of the samples, both at 0 °C and at 25 °C. Gy-ZIF-PVA exhibits noticeably higher CO₂ sorption capacity than the other samples. As expected, CO₂ sorption at 25 °C is lower than it is at 0 °C for all samples (Table 3).

**Table 3. Material properties of samples containing ZIF-8.**

| **Sample** | **BET surf. area σ(m² g⁻¹) [micropore surf. area]^{a}** | ***V*_{1.7-300nm}^{b} (cm³ g⁻¹)** | **Av. pore diam.^{c} (nm)** | **CO₂ adsorption (cm³ g⁻¹, 273 K)^{d}** | **CO₂ adsorptio n (mmol g^{- 1}, 273 K)^{d}** | **CO₂ adsorption (cm³ g⁻¹, 298 K)^{d}** | **CO₂ adsorp tion (mmol g⁻¹, 298 K)^{d}** |
|---|---|---|---|---|---|---|---|
| **ZIF-8** | 1216 [1191] | 0.034 | 2.2 | 31.2 | 1.4 | 13.4 | 0.55 |
| **Gy-ZIF-PVA** | 117 [108] | 0.017 | 2.6 | 4.62 | 0.21 | 3.01 | 0.12 |
| **Gy-ZIF-MC** | 121 [119] | 0.004 | 2.1 | 3.07 | 0.14 | 2.00 | 0.082 |
| **Cem-ZIF-PVA** | 114 [111] | 0.002 | 2.1 | 3.72 | 0.17 | 2.08 | 0.085 |
| **Cem-ZIF-MC** | 128 [123] | 0.008 | 2.3 | 4.01 | 0.18 | 2.11 | 0.086 |
| **RC-ZIF-PVA** | 95 [92] | 0.004 | 2.2 | 2.96 | 0.13 | 1.66 | 0.068 |
| **RC-ZIF-MC** | 123 [116] | 0.023 | 2.7 | 3.54 | 0.16 | 1.92 | 0.078 |

| | | | | | | | |
|---|---|---|---|---|---|---|---|
| ^{a} Micropore surface area *via t*-plot analysis, according to the Harkins and Jura model. ^{b} Cumulative volume of pores between 1.7 and 300 nm from N₂-sorption data and the BJH desorption method. ^{c} Calculated by the 4 *V*/*σ* method; *V* was set equal to the maximum volume of N₂ adsorbed along the isotherm as *P*/*P*ₒ → 1.0. ^{d} At *P* = 1 bar. | | | | | | | |

N₂ sorption isotherms of all samples are typical of microporous solids (figure 26). The pore size distribution, calculated from CO₂ sorption data using the DFT method, shows maxima at 0.8 nm for all samples except for Gy-ZIF-MC, for which the maximum is above 1 nm (figure 25). In figure 25, the upper curves are each associated with the upper (first) indication in the corresponding legend, the middle curve with the middle indication in the corresponding legend, and the lower curves each with the lower (last) indication in the corresponding legend.

MIL-53 has lower BET and micropore surface areas than ZIF-8, but adsorbs more CO₂, both at 0 °C and at 25 °C (**Table 4** and figure 27). It is evident that this MOF can adsorb CO₂ not because of its porous structure, but mostly due to its chemical structure. Similarly, samples containing MIL-53 have low BET surface areas and negligible micropore content. However, their CO₂ sorption capacities are high, in some cases (Gy-MIL-MC, RC-MIL-MC) even 3x higher than that of their ZIF-8-containing counterparts. Even when comparing among MIL-53-containing samples, there seems to be no correlation between their surface areas and their CO₂ sorption capacity, further strengthening the idea that it's not the porous structure of the materials that causes the CO₂ sorption, but the availability of the proper coordination sites for CO₂.

**Table 4. Material properties of samples containing MIL-53.**

| **Sample** | **BET surf. area** 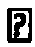 **(m² g⁻¹) [micropore surf. area]^{a}** | ***V*_{1.7-300nm}^{b} (cm³ g⁻¹)** | **Av. pore diam.^{c} (nm)** | **CO₂ adsorption (cm³ g⁻¹, 273 K)^{d}** | **CO₂ adsorption (mmol g⁻¹, 273 K)^{d}** | **CO₂ adsorptio n (cm³ g⁻¹, 298 K)^{d}** | **CO₂ adsorpti on (mmol g⁻¹, 298 K)^{d}** |
|---|---|---|---|---|---|---|---|
| **MIL-53** | 369 [247] | 0.39 | 6.2 | 55.7 | 2.5 | 34.2 | 1.4 |
| **Gy-MIL-PVA** | 10 [4] | 0.034 | 14 | 4.94 | 0.22 | 3.40 | 0.15 |
| **Gy-MIL-MC** | 4 | 0.022 | 25 | 7.10 | 0.32 | 3.57 | 0.16 |
| **Cem-MIL-PVA** | 10 [3] | 0.016 | 7.5 | 1.72 | 0.077 | 0.94 | 0.042 |
| **Cem-MIL-MC** | 23 [13] | 0.027 | 6.5 | 6.81 | 0.30 | 4.31 | 0.19 |
| **RC-MIL-PVA** | 4 | 0.023 | 23 | 2.28 | 0.10 | 1.50 | 0.067 |
| **RC-MIL-MC** | 28 [13] | 0.056 | 9.2 | 9.42 | 0.42 | 4.79 | 0.21 |

| | | | | | | | |
|---|---|---|---|---|---|---|---|
| ^{a} Micropore surface area *via t*-plot analysis, according to the Harkins and Jura model. ^{b} Cumulative volume of pores between 1.7 and 300 nm from N₂-sorption data and the BJH desorption method. ^{c}Calculated by the 4 *V*/*σ* method; *V*was set equal to the maximum volume of N₂ adsorbed along the isotherm as *P*/*P*ₒ → 1.0. ^{d} At *P* = 1 bar. | | | | | | | |

For samples containing MIL-53, N₂-sorption isotherms have hysteresis loops and do not reach saturation, indicating macroporous materials with some mesoporosity (figure 27). The BJH method shows pore size distributions with maxima at 34 nm for pure MIL-53, 24 nm for cement samples, 16-21 nm for RC samples, and 27-29 nm for gypsum samples (figure 27, insets). Micropore size distributions from CO₂ sorption data using the DFT method show maxima at around 0.85 nm, although in some cases the maxima are pushed to higher values, up to 0.95 nm, or even higher that 1 nm (figure 28). In figure 28, the upper curves are each associated with the upper (first) indication in the corresponding legend, the middle curve with the middle indication in the corresponding legend, and the lower curves each with the lower (last) indication in the corresponding legend. It is noted that the lower curve has a point with a pore width in the range between 1.0nm and 1.1nm that has higher pore volume at this point than the corresponding points of the upper and middle curves.

With UiO-66, several different trends were observed, compared to the previous samples. All samples were almost completely microporous. Gypsum and RC samples, although the loss of BET and micropore surface areas, relative to the pure MOF, was higher than 90%, the hindering of CO₂ sorption did not exceed 80% and was as low as 60% for Gy-UIO-PVA. The samples partially retained their CO₂ sorption capacities at 25 °C, despite the fact that UiO-66 itself did not adsorb at this temperature (**Table 5** and figure 30). Micropore size distributions from CO₂ sorption data using the DFT method showed that gypsum and RC samples have pores in the range of 0.5 to 0.9 nm (figure 29). In figure 29, the upper curves are each associated with the upper (first) indication in the corresponding legend and the lower curves each with the lower (last) indication in the corresponding legend.

**Table 5. Material properties of samples containing UiO-66.**

| **Sample** | **BET surf. area *σ*(m² g⁻¹) [micropore surf. area]^{a}** | *V*_{1.7-300nm}^{b} **(cm³ g⁻¹)** | **Av. pore diam.^{c} (nm)** | **CO₂ adsorption (cm³ g⁻¹, 273 K)^{d}** | **CO₂ adsorption (mmol g⁻¹**, **273 K)^{d}** | **CO: adsorption (cm³ g⁻¹, 298 K)^{d}** | **CO₂ adsorption (mmol g⁻¹, 298 K)^{d}** |
|---|---|---|---|---|---|---|---|
| UiO-66 | 552 [440] | 0.04 | 2.3 | 14.2 | 0.63 | 0 | 0 |
| **Gy-UIO-PVA** | 46 [38] | 0.01 | 3.0 | 5.65 | 0.25 | 3.09 | 0.13 |
| **Gy-UIO-MC** | 48 [45] | 0.002 | 2.0 | 3.58 | 0.16 | 2.80 | 0.11 |
| **RC-UIO-PVA** | 35 [32] | 0.007 | 2.7 | 3.09 | 0.14 | 1.42 | 0.058 |
| **RC-UIO-MC** | 49 [43] | 0.02 | 3.2 | 3.26 | 0.15 | 2.09 | 0.085 |

| | | | | | | | |
|---|---|---|---|---|---|---|---|
| ^{a} Micropore surface area *via t*-plot analysis, according to the Harkins and Jura model.^{b} Cumulative volume of pores between 1.7 and 300 nm from N₂-sorption data and the BJH desorption method. ^{c} Calculated by the 4 *V*/*σ* method; *V* was set equal to the maximum volume of N₂ adsorbed along the isotherm as *P*/*P*ₒ -> 1.0. ^{d} At P = 1 bar. | | | | | | | |

Gypsum samples performed better with MIL-53. The choice between PVA and MC seems to have affected only the samples containing ZIF-8, among which PVA samples performed better, while giving similar results for the other two MOFs (**Table 6** and figure 31). In figure 31, in the left diagram, the curve that has the highest adsorbed quantity at 100 kPa is associated with Gy-MIL-PVA, the curve that has the lowest adsorbed quantity at 20kPa is associated with Gy-UIO-PVA, and the other curve with Gy-ZIF-PVA. In the second diagram of figure 31, the upper curve is associated with the upper (first) indication in the corresponding legend, the middle curve with the middle indication in the corresponding legend, and the lower curve with the lower (last) indication in the corresponding legend.

**Table 6. Material properties of gypsum samples.**

| **Sample** | **BET surf. area σ(m² g⁻¹) [micropore surf. area]^{a}** | ***V*_{1.7-300nm}^{b} (cm³ g⁻¹)** | **Av. pore diam.^{c} (nm)** | **CO₂ adsorption (cm³ g⁻¹, 273 K)^{d}** | **CO₂ adsorption (mmol g⁻¹, 273 K)^{d}** | **CO₂ adsorption (cm³ g⁻¹**, **298 K)^{d}** | **CO₂ adsorption (mmol g⁻¹, 298 K)^{d}** |
|---|---|---|---|---|---|---|---|
| **Gy-MIL-PVA** | 10 [4] | 0.034 | 14 | 4.94 | 0.22 | 3.40 | 0.15 |
| **Gy-ZIF-PVA** | 117 [108] | 0.017 | 2.6 | 4.62 | 0.21 | 3.01 | 0.12 |
| **Gy-UIO-PVA** | 46 [38] | 0.01 | 3.0 | 5.65 | 0.25 | 3.09 | 0.13 |
| **Gy-MIL-MC** | 4 | 0.022 | 25 | 7.10 | 0.32 | 3.57 | 0.16 |
| **Gy-ZIF-MC** | 121 [119] | 0.004 | 2.1 | 3.07 | 0.14 | 2.00 | 0.082 |
| **Gy-UIO-MC** | 48 [45] | 0.002 | 2.0 | 3.58 | 0.16 | 2.80 | 0.11 |

| | | | | | | | |
|---|---|---|---|---|---|---|---|
| ^{a} Micropore surface area *via* t-plot analysis, according to the Harkins and Jura model. ^{b} Cumulative volume of pores between 1.7 and 300 nm from N₂-sorption data and the BJH desorption method. ^{c} Calculated by the 4 *V*/*σ* method; *V* was set equal to the maximum volume of N₂ adsorbed along the isotherm as *P*/*P*ₒ → 1.0. ^{d} At *P* = 1 bar. | | | | | | | |

Among cement samples, Cem-MIL-MC had the best performance and one of the best of all materials tested at 25 °C (**Table 7** and figure 32). Similarly, RC-MIL-MC had the best performance at 25 °C among the ceramic samples (**Table 8** and figure 33). In figure 32, in the left diagram, the curve that has the highest adsorbed quantity at 100 kPa is associated with Cem-MIL-PVA and the other one with Cem-MIL-PVA. In the second diagram, the upper curve is associated with Cem-MIL-MC and the lower one with Cem-ZIF-MC. In figure 33, in the left diagram, the curve with the highest adsorbed quantity is associated with RC-ZIF-PVA, the curve with the lowest adsorbed quantity with RC-UIO-PVA and the other curve with RC-MIL-PVA. In the right diagram, the upper curve is associated with RC-MIL-MC, the middle curve with RC-UIO-MC and the lower curve with RC-ZIF-MC.

**Table 7. Material properties of cement samples.**

| **Sample** | **BET surf. area σ(m² g-1) [micropore surf. area]^{a}** | ***V*_{1.7-300nm}^{b} (cm³ g⁻¹)** | **Av. pore diam.^{c} (nm)** | **CO₂ adsorption (cm³ g⁻¹, 273 K)^{d}** | **CO₂ adsorption (mmol g⁻¹, 273 K)^{d}** | **CO₂ adsorption (cm³ g⁻¹, 298 K)^{d}** | **CO₂ adsorption (mmol g⁻¹, 298 K)^{d}** |
|---|---|---|---|---|---|---|---|
| **Cem-MIL-PVA** | 10 [3] | 0.016 | 7.5 | 1.72 | 0.077 | 0.94 | 0.042 |
| **Cem-ZIF-PVA** | 114 [111] | 0.002 | 2.1 | 3.72 | 0.17 | 2.08 | 0.085 |
| **Cem-MIL-MC** | 23 [13] | 0.027 | 6.5 | 6.81 | 0.30 | 4.31 | 0.19 |
| **Cem-ZIF-MC** | 128 [123] | 0.008 | 2.3 | 4.01 | 0.18 | 2.11 | 0.086 |

| | | | | | | | |
|---|---|---|---|---|---|---|---|
| ^{a} Micropore surface area *via* t-plot analysis, according to the Harkins and Jura model. ^{b} Cumulative volume of pores between 1.7 and 300 nm from N₂-sorption data and the BJH desorption method. ^{c} Calculated by the 4 *V*/*σ* method; *V* was set equal to the maximum volume of N₂ adsorbed along the isotherm as *P*/*P*ₒ → 1.0. ^{d} At *P* = 1 bar. | | | | | | | |

**Table 8. Material properties of cement samples.**

| **Sample** | **BET surf. area *σ*(m² g⁻¹) [micropor e surf. area]^{a}** | ***V*_{1.7-3000m}^{b} (cm³ g⁻¹)** | **Av. pore diam.^{c} (nm)** | **CO₂ adsorptio n (cm³ g⁻¹, 273 K)^{d}** | **CO₂ adsorptio n (mmol g⁻¹,** 273 **K)^{d}** | **CO₂ adsorptio n (cm³ g⁻¹, 298 K)^{d}** | **CO₂ adsorptio n (mmol g⁻¹, 298 K)^{d}** |
|---|---|---|---|---|---|---|---|
| **RC-MIL-PVA** | 4 | 0.023 | 23 | 2.28 | 0.10 | 1.50 | 0.067 |
| **RC-ZIF-PVA** | 95 [92] | 0.004 | 2.2 | 2.96 | 0.13 | 1.66 | 0.068 |
| **RC-UIO-PVA** | 35 [32] | 0.007 | 2.7 | 3.09 | 0.14 | 1.42 | 0.058 |
| **RC-MIL-MC** | 28 [13] | 0.056 | 9.2 | 9.42 | 0.42 | 4.79 | 0.21 |
| **RC-ZIF-MC** | 123 [116] | 0.023 | 2.7 | 3.54 | 0.16 | 1.92 | 0.078 |
| **RC-UIO-MC** | 49 [43] | 0.02 | 3.2 | 3.26 | 0.15 | 2.09 | 0.085 |

| | | | | | | | |
|---|---|---|---|---|---|---|---|
| ^{a} Micropore surface area *via* t-plot analysis, according to the Harkins and Jura model. ^{b} Cumulative volume of pores between 1.7 and 300 nm from N₂-sorption data and the BJH desorption method. ^{c} Calculated by the 4 *V*/*σ* method; *V* was set equal to the maximum volume of N₂ adsorbed along the isotherm as *P*/*P*ₒ → 1.0. ^{d} At P = 1 bar. | | | | | | | |

Overall, the recipes containing MIL-53 and MC gave the best results for all three construction materials. Among the construction materials, gypsum gave the best results for all combinations.

### 3D printing of proposed monolithic architecture

The choice of binding agents was deliberate, catering to the compatibility of two distinct 3D printing methods. Polyvinyl Alcohol (PVA) was selected for its compatibility with extrusion techniques, enabling the precise modeling of structures by extruding a paste from a syringe. This method is the micro-equivalent of the large-scale 3D printers that extrude a specially formulated construction paste, typically made from cement, concrete, or other similar materials. The syringe used for the extrusion of the prepared pastes was a 10ml syringe with a 0.22cm inner diameter of the caliber (figure 34).

On the other hand, methylcellulose was chosen to align with open powder 3D printing techniques, although it is also compatible with extrusion 3D additive manufacturing techniques. While in the latter a paste is extruded from a printing head, in the former a printing head dispenses an aqueous binding solution over a powdered substrate. As a result, more sophisticated monolithic geometries with tailored characteristics can be designed.

The ideal geometry and shape of a monolith designed to adsorb CO₂ may vary depending on the specific application and the intended use of the monolith within the building's system. However, some proposed considerations for designing such monoliths can be the following:
Surface Area: To maximize CO₂ adsorption, monoliths should have a large surface area. This can be achieved through various geometries, such a textured surface or even a three-dimensional pattern. Greater surface area allows for more contact between the monolith and CO₂.

Design for Flow: In some applications, monoliths may be part of a system, like a chimney, that allows for the flow of air. The monolith's design should consider how the gas flows over or through it, optimizing contact with the CO₂.

Shape and Size: The shape and size of the monolith should be practical for the intended use. In construction applications, monoliths usually come in the form of tiles or bricks that are typically rectangular or square, but other shapes can be considered. The size should align with standard dimensions.

Modularity: Monoliths should be easily assembled or arranged to create larger surfaces like facades.

Durability: Monoliths should be designed to withstand environmental conditions, especially if they will be exposed to the outdoors.

Regeneration: It is essential to design monoliths that can be regenerated and reused after COz adsorption. Regeneration processes should be factored into the design and this is manifested with the materials ability to withstand high temperatures.

Integration: In construction applications, the monoliths should seamlessly integrate into the overall design of the building or structure.

Based on the aforementioned considerations, the production of an upscalled monolith in the form of a tile (structural element 1) through additive manufacturing is described in the following with reference to figures 35 to 37.

The monolith is made of gypsum with a solution of ethanol and water as the binding agent. It comprises two parts. The main body and the lid. The main body of the monolith has dimensions 10x10x2 cm. In the centre, there are 25 through holes of 0.9 cm diameter each arranged in a grid. In the corners of one side there are 8 recesses of 0.8 cm diameter where the corresponding cusps of the second monolith - the lid - snap into place in order for the two parts to function as one with a gap of 1 cm in between them. The lid has dimensions 10x10x1 cm and a hole of 0.9 cm diameter in the centre. The 8 cusps have 0.8cm height and their diameter in the first 0.7 cm is 0.8 cm while at their final 0.1 cm, where they touch the main body, have 0.6 cm diameter. Each recess and each cusp has a distance of 4.5 cm from its previous one.

The textured surfaces and holes increase the surface of the monolith that interacts with the ambient air The shape and size enables modularity. The addititive along with the embroidery-like technique the printing head jets the binding agent enhances the durability of the monolith. The lid acts as a dirt protector for the main body while letting air pass through and interact with the surfaces of the main body. The lid can also be painted for greater intagration on the building's façade or terrace, which is not desirable for the main body of the monolith as this would block the pores of the microporous material.

The monolith was produced using a ZPrinter 310 Plus, which is manufactured by Z Corporation. The software employed for managing the manufacturing process was ZPrint. The ZPrinter 310 Plus, classified as an entry-level 3D printing machine, is known for its remarkable production speed. This particular 3D printer utilizes an innovative fabrication technique based on Inkjet technology, albeit with a unique twist-it employs a HP10 cartridge to jet a binder solution composed of water and ethanol instead of traditional ink. This binder is selectively applied over a bed of composite material powder. The manufacturing process for the monolith was relatively swift, taking approximately 30 minutes for the actual 3D printing phase. Additionally, there is a consolidation period lasting 40 minutes during which the part remains inside the machine, maintained at a temperature of 37°C. Throughout the entire process, the part being 3D printed is immersed within the powder material.

The ZPrint Software initially transforms a 3D design file, created using 3D CAD, into thin cross-sections ranging from 0.08 - 0.22 mm) in thickness. Subsequently, the printer systematically fabricates these cross-sections, layer by layer, commencing from the bottom of the design and progressing upwards.

To initiate the 3D printing process, the printer initially spreads a layer of powder, matching the thickness of the upcoming cross-section to be printed. Then, the print head administers a binding solution onto the powder. This binding solution causes the powder particles to adhere both to each other and to the previously printed cross-section one level below. Subsequently, the feed piston ascends while the build piston descends by one layer's thickness. The printer then disperses a fresh layer of powder and repeats the entire process. In a relatively short time, the entire part is fabricated.

The printer employs several techniques to efficiently produce high-quality parts. Initially, the binder solution is applied with a higher concentration along the part's edges, creating a robust outer shell. Within the part, an internal structure is constructed by printing with a more concentrated binder solution. In contrast, the remaining interior regions are printed with lower saturation, providing stability without the risk of excessive saturation that might result in part distortion.

After the printing is completed, the part is removed from the powder, de-powdered, and dried. Subsequently, the part can undergo infiltration with wax or other performance resins, enhancing its strength and durability.

### Conclusions

Sixteen samples were created by blending traditional construction materials (e.g., cement, gypsum, and recycled ceramic material) with microporous metal-organic frameworks (MOFs) like ZIF-8, UiO-66, and MIL-53(AI) using polyvinyl alcohol, methylcellulose, ethanol, and water as binding agent. These composite material samples contain MOFs at 6% to 10% by weight, construction materials at 50%-60% by weight, and binding agents at 30%-40% by weight. All 16 samples capture carbon dioxide at standard conditions (273 K and 298 K, 1 atm), with adsorption capacities ranging from 1.72 cm³ g-1 to 9.42 cm³ g-1 at 273 K and 0.94 cm³ g-1 to 4.79 cm³ g-1 at 298 K. The appropriate combination of metal-organic frameworks, construction materials and binding agents for optimal carbon dioxide absorption comprises recycled ceramic material, MIL-53(AI), methylcellulose, ethanol and water. Overall, the recipes containing MIL-53 and MC gave the best results for all three construction materials.

## Claims

1. A composite material (10), comprising:
□ a construction material (2),
□ a metal-organic framework (3), and
□ a binding agent (4) via which the metal-organic framework (3) is bound to the construction material (2), wherein the metal-organic framework (3) is configured to adsorb carbon dioxide.

2. The composite material (10) of claim 1, wherein the construction material (2) is cement, gypsum, terracotta material, clay, in particular structural clay tile material, a ceramic material, or concrete.

3. The composite material (10) of any of the preceding claims, wherein the construction material (2) is 30% to 60% w/w, more preferably 40% to 60% w/w, of the composite material (10) and/or wherein the metal-organic framework (3) is 5% to 30 % of the composite material (10), more preferably 5% to 25% w/w, even more preferably 6% to 10% w/w, and/or wherein the binding agent (4) is 30% to 50% of the composite material (10).

4. The composite material (10) of any of the preceding claims, wherein the binding agent (4) is 30% to 50% of the composite material (10).

5. The composite material (10) of any of the preceding claims, wherein the binding agent (4) comprises 5% to 25% w/w of at least one of PVA, PVB, PVF, PVC, PVP, PEI, polysixolane, sucrose, PVDF, HPC, p-alumina, silica, graphite, bentonite, sesbania and talc, and 75% to 95% w/w of at least one of water, ethanol, methanol and DMF.

6. The composite material (10) of any of claims 1 to 5, wherein the binding agent (4) comprises 5% to 20% w/w of at least one of methylcellulose, PVB, PVF, PVC, PVP, PEI, polysixolane, sucrose, PVDF, HPC, p-alumina, silica, graphite, bentonite, sesbania and talc, 30% to 60% w/w of at least one of ethanol, methanol and DMF, and 30% to 60% w/w water.

7. The composite material (10) of any of claims 1 to 6, wherein the binding agent (4) comprises at least one of PVA, methylcellulose, PVB, PVF, PVC, PVP, PEI, polysixolane, sucrose, PVDF, HPC, p-alumina, silica, graphite, bentonite, sesbania and talc.

8. The composite material (10) of any of the preceding claims, wherein the metal-organic framework (3) is in crystalline form.

9. The composite material (10) of any of the preceding claims, wherein the metal-organic framework (3) is a zirconium-based metal-organic framework, a metal-organic framework from the MIL-family, or an imidazolate-based metal organic framework (ZIF).

10. The composite material (10) of any of the preceding claims, further comprising volcanic rock and/or fly ash, in particular wherein the volcanic rock (5) and/or fly ash (6) are at most 20% w/w of the composite material (10).

11. A structural and/or decorative element (1) configured to be used for constructing and/or decorating a building, made of a composite material (10) according to any of the preceding claims.

12. A method for manufacturing a composite material (10), in particular according to any of the preceding claims, wherein the method comprises the steps:
□ providing a construction material (2), a metal-organic framework (3) configured to adsorb carbon dioxide, and a binding agent (4),
□ mixing the metal organic framework with the construction material (2) such that a homogenous powder occurs, and
□ adding the binding agent (4) to the homogenous powder such that a mixture is formed.

13. The method of claim 12, wherein forming of the mixture by adding the binding agent (4) to the homogenous powder takes place at a temperature between 20 degrees Celsius and 30 degrees Celsius, in particular 25 degrees Celsius, and ambient pressure of 1 atm.

14. A method for manufacturing a structural and/or decorative element (1), in particular according to claim 11, wherein the method comprises the steps
□ manufacturing a composite material (10) according to claim 12 or 13,
□ shaping the mixture to a predetermined form for forming a macrostructure,
□ drying the macrostructure, and
□ heating the macrostructure at a predetermined temperature to form the structural and/decorative element.

15. The method of claim 14, wherein the mixture is extruded by an extrusion tool to form pellets or wherein the mixture moulded to provide the predetermined form or wherein the mixture is 3D-printed to provide the predetermined form,
and/or
wherein the macrostructure is dried by leaving the macrostructure in ambient air and/or wherein the predetermined temperature is between 60 degrees Celsius and 100 degrees Celsius, preferably between 70 degrees Celsius and 90 degrees Celsius, even more preferably between 78 degrees Celsius and 83 Celsius.
